# EUROPEAN PATENT SPECIFICATION

(11) **EP 3 952 660 B1**
(45) Date of publication and mention of the grant of the patent: **15.05.2024**
(21) Application number: 20709743.7
(22) Date of filing: 28.02.2020
(51) Int. Cl.: A23G 9/42, A23G 9/48

(54) **ICE CREAM PRODUCT BASED ON DRIED FRUITS AND METHOD FOR THE PRODUCTION THEREOF**
SPEISEEISPRODUKT AUF BASIS VON GETROCKNETEN FRÜCHTEN UND VERFAHREN ZUR HERSTELLUNG DAVON
PRODUIT DE CRÈME GLACÉE À BASE DE FRUITS SECS ET SON PROCÉDÉ DE FABRICATION

(30) Priority: 10.04.2019 IT 201900005502
(43) Date of publication of application: 16.02.2022
(73) Proprietor: Feulner, Enrico Alexander Fernando, 04011 Aprilia (LT) (IT); Feulner, Federico Maximilian Sebastian, 04011 Aprilia (LT) (IT); Natalizia, Roberto, 00041 Albano Laziale (RM) (IT)
(72) Inventor: Feulner, Enrico Alexander Fernando, 04011 Aprilia (LT) (IT); Feulner, Federico Maximilian Sebastian, 04011 Aprilia (LT) (IT); Natalizia, Roberto, 00041 Albano Laziale (RM) (IT)
(74) Representative: Fiammenghi, Eva
(86) International application number: PCT/IB2020/051712
(87) International publication number: WO 2020/208435

(56) References cited:
- EP-A2- 0 240 326
- EP-A2- 0 431 703
- WO-A1-2007/143835
- CN-A- 105 613 934
- CN-A- 106 472 673
- CN-A- 108 651 688
- CN-A- 109 418 502
- RU-A- 2007 109 792
- RU-C2- 2 376 228
- US-A- 5 256 438
- US-A1- 2011 300 264

## Description

### Technical field

The present invention patent application generally regards the food products industry and in particular the ice cream products industry and even more particularly the invention regards a base for ice cream products as well as the method for the production of the base.

### State of the art

As known, the expression food ice-cream or better ice cream product is generally used to indicate a mixture which, through a freezing process more or less intensified during the production, is brought to a state with the consistency of a mixture, which is placed in the market at low temperatures and which is meant to be consumed in such state.

Ice cream products are generally produced using milk and its derivatives, eggs, various types of sugars, honey, water, fruits, butter, vegetable fats, flavourings and/or food colour products. Other ingredients are also used depending on the different types and tastes of the ice cream products.

In Italy there are very few ice cream parlours in which the entire production chain occurs inhouse. Doing without thickeners and emulsifiers and starting from the raw material, as was once done, requires a huge amount of resources, a lot of time and good chemical-physical knowledge of the material. The other problem related with the use of fresh products prepared extemporaneously in the ice cream parlour lies in that the product would have a weak structure, with low shelf life, hence it would have to be consumed within a few hours from preparation. However, in recent years we have been increasingly hearing of a certain "decline" of quality of artisan ice cream products, tending to boost the reputation of industrial "quality" products. Some ice-cream makers attribute this alleged "decline" above all to the increasingly capillary presence of the compound ingredients, whereas the expression compound or semi-finished ingredients is used to indicate preparations which are meant for the production of the ice cream product, but not for direct consumption. There are even those who believe that a product containing industrial semi-finished products cannot be classified as "artisanal".

Actually, these judgements, to say the least simplistic, are completely unfounded and lacking the most elementary knowledge of the subject. Historically, it was actually the artisan who prepared "semi-finished products" in the kitchen thereof (i.e. premixed products that cannot be consumed or used as such but after processing) so as to simplify the work during the most demanding season, so as to cover the lack of fresh raw material at certain times of the year or so as to standardise ingredients that are difficult to dose.

The increase in sales volumes, the legislations in force, the need to produce ice cream products with unquestionable hygiene guarantees and, last but not least, the need to obtain a product that adapts to the needs and tastes of the consumer, has therefore led to the growth of a specific industry which, starting from the initial experience of the artisans, has allowed to create an important link of the chain together with the industry of the relative machinery and equipment. The present invention starts right from the indispensable need that the ice cream product in general deriving from a semi-finished product preserves its original identity, that it remains a product capable of "helping" the artisan, intended to make his work easier, freeing him from difficult secondary operations and, above all, that it be versatile enough to allow the artisan a good use without conditioning the latter in the peculiar creative activity thereof.

Although countless types of ice cream products deriving from semi-finished products are known in the art, it is normal that anything produced be excellent, good, mediocre or poor. It will therefore be crucial to focus on the inherent characteristics of the semi-finished product, which will indisputably reflect on the quality of the final product.

Leaving aside the treatment of the mediocre or poor state-of-the-art semi-finished products, totally excluded from the scope of the present invention, it should be observed that even in the case of good semi-finished products, the latter are very difficult to reproduce faithfully, especially in the case of fruit-based ice cream products, both in terms of the nutritional and organoleptic characteristics of the aforementioned products with respect to the constituents in the fresh state.

Therefore, it is a general object of the present invention to provide a method for preparing an ice cream product based on dried fruits which is as equal as possible and in some ways even better than the product produced extemporaneously with the exclusive use of fresh fruits.

A more particular object is to provide a method for producing said fruit-based ice cream product.

Other advantages of the invention will be apparent from the detailed description of an embodiment thereof, provided by way of non-limiting example, illustrated below.

### Description of the invention

The present invention achieves its main objects, consisting in the production method and in the use of dried fresh fruits for the production of an ice cream product in general and more specifically in the manufacture of a fruit-based ice cream product deriving from a semi-finished product, which is as equal as possible and in some ways better than the final product produced extemporaneously with the exclusive use of fresh fruits. In particular, according to the present invention, the term ice cream product will be used to indicate all products that can be produced in the ice cream parlour, as well as - for descriptive and non-limiting purpose - ice creams, frozen yoghurt, semi-frozen desserts, sorbets, granitas, soft ice creams, cake fillings, and so on and so forth.

A more particular object is to use dried fruits, which are produced using an innovative antioxidative method at temperatures not too high, capable of mainly safeguarding both the organoleptic and chemical/physical characteristics of fresh fruits.

The innovative concept underlying the present invention therefore consists in providing for the use of a main constituent of the product subject of invention which consists in fresh fruits which are specially dried by means of an anti-oxidative process which is part of the inventive step according to the present invention.

To the full advantage of practicality and economy, the present invention has as a further objective of providing a manufacturing method, sealed packages in modified atmosphere, containing the semi-finished product for the preparation of the final fruit-based ice cream product. In particular, the packaging of the semi-finished product will consist of a single package containing in association said dried fresh fruits as well as the aforementioned neutral base, or preferably separately in the form of two or more packages. A further aspect of particular importance in the implementation of the invention lies in that it has several advantageous characteristics with respect to those already outlined above and with respect to those regarding the state of the art. In particular, it should be observed that the use of a semi-finished product for a fruit-based ice cream product, which wholly reproduces, in some cases amplifying, the characteristics of the use of fresh fruits, brings to the inventive step of the present invention several advantages which, for the sake of simplicity, even though just partly, are listed below:
- elimination of all wastes deriving from the natural perishing of fresh fruits;
- independence from the seasonal trend of the market and hence from the prices and availability of the raw material;
- reducing the storage volumes with consequent lowering of transportation costs and of the "carbon footprint" of the product in question;
- flexibility in the dosage of dried fruits to enhance or not enhance the taste of the product obtained;
- maintaining a constant quality standard, even in anticipation of an international "franchising" standard;
- longer storage period with respect to all the semi-finished products of the prior art;
- reducing all waste from the supply chain, in particular fresh fruits, to the minimum;
- producing food suitable for raw recipes i.e. products processed at temperatures not exceeding 40°C;
- reducing the possibility of microbial contamination during the steps for producing the ice cream product;
- producing the dried fruits subject of the invention by maintaining the quality standards required directly locally, same case applying to tropical fruits directly in Africa and/or South America;
- ease of product execution and so on and so forth.

Further characteristics of the present invention are described in the following detailed description of one or more specific embodiments, protected by the related dependant claims. Documents of the prior art describing ice-cream parlour products are, for instance, the following ones:
US 5 256 438 A, RU 2007 109792 A, WO2007/143835 A1, CN 106 472 673 A, EP 0 431 703 A2, CN 105 613 934 A, EP 0 240 326 A2, CN 108 651 688 A, US 2011/300264 A1 and CN 109 418 502 A.

For instance, EP 0 431 703 differs, among others, from the present method in that, e.g., no controlled reduction of the temperature in the fruit-drying step is disclosed.

EP 0 240 326 A2 concerns a powdered composition usable to form a natural yogurt soft ice cream. The powdered composition contains live natural yogurt bacilli, and this is the main feature of the invention. The composition also contains about 0 to 5% dehydrated fruit powder(s). The drying process of the fresh fruits is not disclosed at all.

WO 2007/143835 discloses a frozen confection comprising a starting material containing a wet or dried material having increased nutritional value, and a wet or dry flavouring. The wet or dried material having increased nutritional value is between 0-75% of the weight of the frozen confection. The wet or dry flavouring can be wet, dried, or powdered fruit (claims 2, 4 and 6). However, this document does not focus at all on the drying process for fresh fruits. None of the preceding documents seem to pay special attention to an antioxidative drying process for the fresh fruits.

### Brief description of the drawings

The foregoing advantages, as well as other advantages and characteristics of the present invention, will be illustrated with reference to the attached drawings, which are to be considered as merely illustrative and non-limiting or non-binding as pertains the purposes of the present patent application:
- FIGURE 1 represents the exemplary production flow chart of the method according to the present invention;
- FIGURE 2 represents the flow chart of the step for the anti-oxidative production of dried fruits 100 according to the present invention;
- FIGURE 3 represents the flow chart of the step for producing the neutral base 200 according to the present invention;
- FIGURE 4 represents the flow chart of the packaging step 300 according to the present invention;
- FIGURE 5 represents the flow chart of the step for producing the ice cream product 400.

### Preferred embodiments of the invention

The present invention will now be described in detail purely by way of example, with reference to the figures and to a preferred embodiment thereof shown therein, in which identical reference numbers were used for the same components and/or production steps.

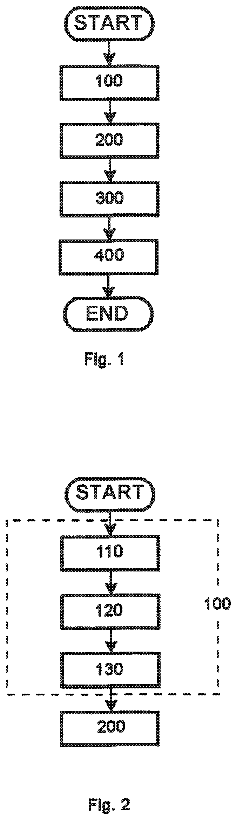

As shown in Fig. 1 the present invention mainly consists of four production steps consisting of the step of anti-oxidative production of the dried fruits 100, the step of production of the neutral base 200, the step of packaging 300 and lastly the step of production of the ice cream product 400.

With reference to Fig. 2, it shows the fundamental step of the antioxidant production of the dried fruits 100, in turn consisting of the step of input and preparation of the fruits 110, wherein the fruits are placed on suitable roller benches in the processing line, allowing the staff to have a perfect and full vision of the product to be discarded. Then the fresh fruits are introduced into the washing zone and lastly, where necessary, the peeling and the cutting, which, depending on the type of product, can be carried out by means of conventional automated machinery. At this point the product forming a sheet-like and/or cube-like shape, depending on the type of fruits used, is ready for the sensitive phase of anti-oxidative drying of the fruits 120, in which the fruits coming from the aforementioned step 110 is laid manually or by means of automated belts on grids in a static or continuous dryer for fruits and vegetables. Said dryer is characterised in that it has a heating system, obtained by means of conventional electric resistors and/or conventional methane or LPG gas burners and/or low environmental impact means, as well as solar photovoltaic panels, in that it has an alternating system at predetermined intervals and in any case not less than 5 minutes, depending on the type of fruits to be processed, for introducing dehumidified air, having a humidity ranging from 1% to 10% and preferably equal to 2-3% and respectively for removing residual air. As concerns the inventive step, particular attention must be paid to this dehumidification step, in which the temperature inside the dryer must be comprised between 25°C and 40°C for a period of time comprised between 12 hours and 48 hours, being particularly keen to ensure that the temperature of the fruits in the dryer does not exceed 40°C. Furthermore, occurring at the end of the aforementioned time interval is the controlled temperature reduction step 130, which consists in a multi-step reduction of the temperature in the dryer up to the room temperature, by means of a controlled reduction comprised between 2°C and 3°C every 3 hours. Such low temperature and low thermal gradient conditions, obtained in the aforementioned steps, will be inventively indispensable precisely due to the fact that such values, although they are capable of reducing the relative water content of the fresh fruits from the normal 65-95% to values that drop below 15%, will simultaneously cause only a weak, almost absent, oxidative activity on the fruits being processed. An aforementioned weak, almost absent, oxidative activity, during the whole drying process, will cause said dried fruits 105 to keep their nutrients almost intact, with particular reference to the content of the organic compounds (poor oxidation of the fatty acids), the content of the noble components i.e. vitamins and certain proteins, the content of enzymes and mineral salts, the content of natural sugars and food fibres, which will result - in more practical terms - in maintaining the organoleptic, colouring and structure characteristics of the phyto-complex, ensuring a fruit-based product with added value considerably higher than those of the prior art.

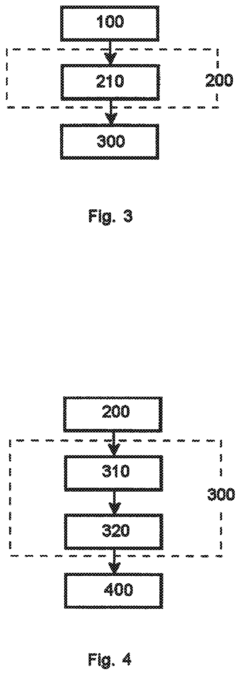

With reference to Fig. 3, the latter represents the step for producing the neutral base 200 according to the present invention. Specifically, the neutral base 250 together with the dried fruits 105 constitute the two constituents forming the semi-finished two-component product for an ice cream product 205 subject of the invention. Specifically, the aforementioned neutral base 250 is obtained by mixing 210 one or more components comprising natural thickeners 251, natural sugars 252, vegetable fibres 253, plant proteins 254, powdered milk and its derivatives 255, salt and flavour enhancers 256 as well as miso and cocoa powder 257 preferably the raw cocoa powder. Said natural thickeners 251 will be present at a small amount comprised between 0.5% by weight and 5% by weight and more preferably equal to 2% by weight. Preferably, said natural thickeners 251 consist of one or more substances comprising carob flour, tara gum, guar, agar agar, psyllium. In general, given the high concentration of natural noble sugars, which remain in the dried fruits 105 according to the present invention, the presence of added natural sugars 252 may not be required and such characteristic is not negligible, since - besides the excellent organoleptic properties of the fruit-based ice cream product subject of the invention - said high concentration will reduce the glycaemic impact of the consumer by a value of about 70%. Should particular types of fruits having a low sugar content be used, i.e. if one wants to obtain a fruit-based ice cream product with a more marked taste or should one want to obtain specific products such as granites, sorbets and so on and so forth, provided for is said step of adding natural sugars 252, same case applying to sucrose, fructose, dextrose, glucose and/or hypocaloric sugars of the xylitol, stevia, erythritol type, etc., with a concentration comprised between 5% and 40% by weight, more preferably between 15% and 20% by weight.

With reference to Figure 4, the latter shows the step 300 for packaging the semi-finished two-component product for an ice cream product 205, i.e. the neutral base 250 and the dried fruits 105, which are stored separately in two different bags 320. Said bags 320 are packaged in a modified atmosphere (MAP) 310 and all this with the aim of guaranteeing a prolonged "shelflife", without the need for the addition of preservatives and/or stabilisers. Furthermore, depending on the marketing strategy adopted, each envelope 320 contains a variable amount of constituents and comprised between the amount required for obtaining a single-portion to the amount required for multiple portions of fruit-based ice cream product.

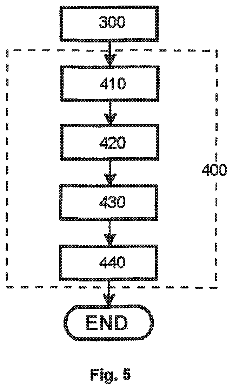

With reference to Fig. 5, the latter shows the final step for the production of the ice cream product 400 starting from the semi-finished two-component product for an ice cream product 205 carried out in the previous steps. The particular characteristics of the constituent steps, that is to say the specific packaging step 300 characterised by a separate packaging of the two constituents of the semi-finished two-component product subject of the invention, make the aforementioned semi-finished product suitable for simple reconstitution in the final step, that is, on the point of sale or directly by the user. Specifically, the step for producing the ice cream product 400 consists in the initial rehydration 410 comprising opening the bag 320 containing the dried fruits 105 and then subsequently mixing the latter at room temperature with the edible liquid 480, consisting of one or more substances preferably comprising water, fruit juices and cow's milk, sheep's milk, goat's milk as well as its derivatives. There follows the mixing 420 by adding the neutral base 250 to the re-hydrated fruits obtained in the previous step. Then there follows a short blending 430 of the mixture thus obtained, for a period of time comprised between 1 min and 5 min and finally a subsequent whipping 440 at low revolutions in an ice cream maker at a temperature ranging from -8°C to -25°C and more preferably at -15°C until the formation of the finished fruit ice cream product.

The present invention provides for further alternative embodiments corresponding to some variants of the product as well as the method of use of constituents thereof.

For example, even if a whipping in a common ice-cream maker, suitably cooled, has been described in the final step up to now, the inventive concept characterised by the use of said dried fruits 105 subject of the invention can be advantageously extended to the manufacture of the extemporaneous ice-cream using liquid nitrogen. In this connection, the aforementioned rehydration 410 of the dried fruits 105 with the edible liquid 480 is first carried out, then the subsequent mixing 420 with the neutral base 250, then the blending 430 and subsequent cooling of the mixture obtained by constantly adding liquid nitrogen in a container under continuous mixing using common metal whisk, until an ice cream with excellent consistency and organoleptic properties is obtained.

A further use of the aforementioned excellent qualitative and organoleptic characteristics of that dried fruits 105 obtained in the step for the anti-oxidative production of the dried fruits 100 and in the packaging step 300, consists in making a dried fruit beverage 105 comprising smoothies. Specifically, it consists in rehydrating said dried fruits 105 contained in the bag 300 by adding one or more substances comprising yoghurt, lean yoghurt, cow's milk, soy milk and water and then simply blending up to obtaining the desired finished product.

Obviously, the data provided herein are purely by way of non-limiting example of the scope of the present invention, since they are exclusively meant to put a person skilled in the art in a position to understand some possible applications and embodiments of the invention, as defined by the following claims.

## Claims

1. Method for preparing an ice cream product based on dried fruits **characterised in that** it comprises the following steps:
a. step for the anti-oxidative production of dried fruits (100) consisting of the step for the entry and preparation of the fruits (110), wherein the fresh fruits are initially checked qualitatively, then washed using an automated method and if necessary peeled, cut into strips or cubes and then subjected to the fruits anti-oxidative drying step (120), which occurs by depositing, on grids, in a fruits and vegetables static or continuous dryer, wherein said dryer consists of a heating system capable of reaching mild temperatures by means of conventional electrical resistors power-supplied by solar photovoltaic panels and/or conventional methane gas or LPG burners wherein said dryer also consists of a system for introducing dehumidified air with humidity content comprised between 1% and 10% and preferably equivalent to 2-3% and removing the residual air and wherein the aforementioned step of introducing dehumidified air and removing residual air occurs at intervals pre-established by the operator depending on the type of fruits to be treated and however not below 5 minutes, wherein the temperature inside the dryer is comprised between 25°C and 40°C for a treatment period for drying the fruits comprised between 12 hours and 48 hours and wherein at the end of the aforementioned time interval there occurs the controlled temperature reduction step (130), consisting in a reduction of temperature in the dryer up to room temperature, by means of the controlled reduction comprised between 2°C and 3°C every 3 hours, wherein obtained at the end of the aforementioned steps are the dried fruits (105) which, thanks to the aforementioned treatment conditions at mild temperature and low thermal gradient, will only have undergone minimum oxidative activity during the entire drying process.
b. the step for producing the neutral base (200) wherein said neutral base (250) alongside the dried fruits (105) constitute the two constituents which form the semi-finished two-component product for an ice cream product (205) and wherein the aforementioned neutral base (250) is obtained by mixing (210) the components natural thickeners (251), natural sugars (252), vegetable fibres (253), vegetable proteins (254), powdered milk and its derivatives (255), the salt and flavour enhancers (256) and cocoa powder (257);
c. the step (300) for packaging the semi-finished two-component product for an ice cream product (205), i.e. the neutral base (250) and the dried fruits (105), which is carried out by packaging in bags (320) in modified atmosphere (MAP) (310) and wherein the aforementioned dried fruits (105) and the aforementioned neutral base (250) are separately contained in two different bags (320);
d. the step for producing the ice cream product (400) wherein the semi-finished two-component product for an ice cream product (205) is transformed, at the time of consumption, in form of a processed fruit-flavoured ice cream product through the following actions in succession consisting in:
- re-hydration (410) comprising the opening of the bag (320) containing the dried fruits (105) and then the mixing of the latter at room temperature with an edible liquid (480) consisting of one or more substances comprising water, fruit juices and cow's milk, sheep's milk, goat's milk as well as its derivatives;
- mixing (420) the re-hydrated fruits with neutral base (250) contained in the other bag (320);
- blending (430) the obtained mixture for a period comprised between 1 min and 5 min;
- whipping (440) at low revolutions in an ice cream maker at a temperature comprised between -8°C and -25°C and more preferably at -15°C up to obtaining the processed fruit-flavoured ice cream product.

2. Method for preparing an ice cream product according to claim 1, **characterised in that** in the step for the anti-oxidative production of dried fruits (100) the treatment conditions, such as the mild temperature and not above 40°C in any case, the low thermal gradient values applied through the controlled reduction of the temperature and the minimum humidity values of the air introduced into the system, subject the dried fruits to just a minimum oxidative activity and thus the dried fruits (105) maintain the content of the organic compounds such as fatty acids, the content of the noble components such as vitamins and some proteins, the content of the enzymes and mineral salts, the content of natural sugars, the content of food fibres and of the phyto-complex intact.

3. Method for preparing an ice cream product according to claim 1, **characterised in that** the whipping (440) consists in cooling, in a common recipient, by constantly adding liquid nitrogen under continuous mixing using a common metal whisk and up to obtaining a consistency such to form a processed ice cream product.

4. Method for preparing an ice cream product according to claim 1, **characterised in that** the step of packaging (300) the two-component semi-finished product for an ice cream product (205), i.e. the neutral base (250) and the dried fruits (105), which is carried out by packaging in bags (320) with a weight required to obtain at least one single portion of the processed fruit-flavoured ice cream product.

5. Method for preparing an ice cream product based on dried fruits according to any of the preceding claims, **characterised in that**:
a. said natural thickeners (251) consist of one or more substances comprising carob flour, tara gum, guar, agar agar and psyllium with a concentration comprised between 0.5% by weight and 5% by weight and more preferably at an amount equivalent to 2% by weight;
b. said natural sugars (252) consist of one or more substances comprising sucrose, fructose, dextrose, glucose and/or hypocaloric sugars of the xylitol type, stevia and erythritol at a concentration comprised between 5% and 40% by weight, more preferably between 15% and 20% by weight;
c. said flavour enhancers (256) comprise miso;
d. said cocoa powder (257) comprises raw cocoa powder.

6. Method for preparing an ice cream product based on dried fruits according to claim 5, **characterised in that** the ice cream product is anyone of the following: ice creams, frozen yoghurts, semi-frozen desserts, sorbets, granitas, smoothies and cake fillings.

## Patentansprüche

1. Verfahren zur Herstellung eines Speiseeisprodukts basierend auf getrockneten Früchten, **dadurch gekennzeichnet, dass** es die folgenden Schritte aufweist:
a. Schritt zur antioxidativen Herstellung getrocknetenr Früchte (100), bestehend aus dem Schritt des Eingangs und der Zubereitung der Früchte (110), bei dem die frischen Früchte zunächst qualitativ geprüft, dann unter Verwendung eines automatisierten Verfahrens gewaschen und gegebenenfalls geschält, in Streifen oder Würfel geschnitten und dann dem Schritt (120) der antioxidativen Trocknung der Früchte unterzogen werden, die durch Ablegen auf Gittern in einem statischen oder kontinuierlichen Obst- und Gemüsetrockner erfolgt, wobei der Trockner aus einem Heizsystem, das in der Lage ist, milde Temperaturen durch herkömmliche elektrische Widerstände zu erreichen, die durch photovoltaische Solarpaneele und/oder herkömmliche Methangas- oder LPG-Brenner mit Energie versorgt werden, besteht, wobei der Trockner außerdem aus einem System zum Einleiten von entfeuchteter Luft, die einem Feuchtigkeitsgehalt zwischen 1 % und 10 % und vorzugsweise gleich 2-3 % aufweist, und zum Entfernen der Restluft besteht und wobei der vorgenannte Schritt des Einleitens von entfeuchteter Luft und des Entfernens von Restluft in Intervallen erfolgt, die durch den Bediener in Abhängigkeit von der Art der zu behandelnden Früchte zuvor festgelegt werden, jedoch nicht unter 5 Minuten, wobei die Temperatur innerhalb des Trockners zwischen 25°C und 40°C für einen Behandlungszeitraum zum Trocknen der Früchte zwischen 12 Stunden und 48 Stunden aufweist und wobei am Ende des vorgenannten Zeitintervalls der Schritt (130) der kontrollierten Temperaturabsenkung stattfindet, der in einer Absenkung der Temperatur im Trockner bis auf Raumtemperatur besteht, durch die kontrollierte Senkung, die alle 3 Stunden zwischen 2°C und 3°C aufweist, wobei am Ende der vorgenannten Schritte die getrockneten Früchte (105) erhalten werden, die dank der vorgenannten Behandlungsbedingungen bei milder Temperatur und geringem thermischen Gradienten während des gesamten Trocknungsprozesses nur eine minimale oxidative Aktivität erfahren haben werden.
b. den Schritt zum Herstellen der neutralen Basis (200), wobei die neutrale Basis (250) zusammen mit den getrockneten Früchten (105) die beiden Bestandteile bildet, die das halbfertige Zweikomponentenprodukt für ein Speiseeisprodukt (205) bilden, und wobei die vorgenannte neutrale Basis (250) durch Mischen (210) der Komponenten natürliche Verdickungsmittel (251), natürliche Zucker (252), pflanzliche Fasern (253), pflanzliche Proteine (254), Milchpulver und seinen Derivaten (255), dem Salz und den Geschmacksverstärkern (256) und Kakaopulver (257) erhalten wird;
c. den Schritt (300) zum Verpacken des halbfertigen Zweikomponentenprodukts für ein Speiseeisprodukt (205), d. h. der neutralen Basis (250) und der getrockneten Früchte (105), der durch Verpacken in Beuteln (320) in modifizierter Atmosphäre (MAP) (310) durchgeführt wird und bei dem die vorgenannten getrockneten Früchte (105) und die vorgenannte neutrale Basis (250) getrennt in zwei verschiedenen Beuteln (320) enthalten sind;
d. den Schritt zum Herstellen des Speiseeisprodukts (400), bei dem das halbfertige Zweikomponentenprodukt für ein Speiseeisprodukt (205) zur Zeit des Verzehrs durch die folgenden aufeinanderfolgenden Handlungen, die bestehen aus:
- Rehydratisierung (410), die das Öffnen des Beutels (320), der die getrockneten Früchte (105) enthält, und dann das Mischen der letzteren bei Raumtemperatur mit einer essbaren Flüssigkeit (480), die aus einer oder mehr Substanzen, die Wasser, Fruchtsäfte und Kuhmilch, Schafmilch oder Ziegenmilch sowie deren Derivate umfassen, besteht, aufweist;
- Mischen (420) der rehydrierten Früchte mit neutraler Basis (250), die in dem anderen Beutel (320) enthalten ist;
- Mischen (430) der erhaltenen Mischung für einen Zeitraum, der zwischen 1 Min. und 5 Min. aufweist;
- Aufschlagen (440) bei niedrigen Umdrehungen in einer Eismaschine bei einer Temperatur, die zwischen -8°C und -25°C und stärker bevorzugt bei -15°C liegt, bis zum Erhalt des verarbeiteten Speiseeisprodukts mit Fruchtgeschmack;
in Form eines verarbeiteten Speiseeisprodukts mit Fruchtgeschmack umgewandelt wird.

2. Verfahren zur Herstellung eines Speiseeisprodukts nach Anspruch 1, **dadurch gekennzeichnet, dass** in dem Schritt zur antioxidativen Herstellung getrockneter Früchte (100) die Behandlungsbedingungen wie etwa die milde Temperatur, die in keinem Fall über 40°C liegt, die niedrigen thermischen Gradientenwerte, die durch die kontrollierte Absenkung der Temperatur angewendet werden, und die minimalen Feuchtigkeitswerte der in das System eingeleiteten Luft, die getrockneten Früchte nur einer minimalen oxidativen Aktivität aussetzen und somit die getrockneten Früchte (105) den Gehalt an organischen Verbindungen wie etwa Fettsäuren, den Gehalt an edlen Komponenten wie etwa Vitaminen und einigen Proteinen, den Gehalt an Enzymen und Mineralsalzen, den Gehalt an natürlichen Zuckern, den Gehalt an Nahrungsfasern und den Phytokomplex intakt halten.

3. Verfahren zur Herstellung eines Speiseeisprodukts nach Anspruch 1, **dadurch gekennzeichnet, dass** das Aufschlagen (440) darin besteht, in einem üblichen Gefäß durch ständiges Hinzufügen von flüssigem Stickstoff unter ständigem Mischen unter Verwendung eines üblichen Metallquirls und bis zum Erhalt einer solchen Konsistenz, dass ein verarbeitetes Speiseeisprodukt gebildet wird, zu kühlen.

4. Verfahren zur Herstellung eines Speiseeisprodukts nach Anspruch 1, **dadurch gekennzeichnet, dass** der Schritt des Verpackens (300) des halbfertigen Zweikomponentenprodukts für ein Speiseeisprodukt (205), d. h. der neutralen Basis (250) und der getrockneten Früchte (105), durch Verpacken in Beuteln (320) mit einem Gewicht, das erforderlich ist, um zumindest eine einzelne Portion des verarbeiteten Speiseeisprodukts mit Fruchtgeschmack zu erhalten, erfolgt.

5. Verfahren zur Herstellung eines Speiseeisprodukts basierend auf getrockneten Früchten nach einem der vorhergehenden Ansprüche, **dadurch gekennzeichnet, dass**:
a. die natürlichen Verdickungsmittel (251) aus einer oder mehr Substanzen, die Johannisbrotmehl, Tarakernmehl, Guarkernmehl, Agar-Agar und Flohsamen in einer Konzentration zwischen 0,5 Gew.-% und 5 Gew.-% und stärker bevorzugt in einer zu 2 Gew.-% entsprechenden Menge aufweisen, bestehen;
b. die natürlichen Zucker (252) aus einem oder mehr Stoffen, die Saccharose, Fructose, Dextrose, Glucose und/oder hypokalorische Zucker vom Typ Xylit, Stevia und Erythrit in einer Konzentration zwischen 5 und 40 Gew.-%, stärker bevorzugt zwischen 15 und 20 Gew.-%, aufweisen, bestehen;
c. die Geschmacksverstärker (256) Miso aufweisen;
d. das Kakaopulver (257) rohes Kakaopulver aufweist.

6. Verfahren zur Herstellung eines Speiseeisprodukts basierend auf getrockneten Früchten nach Anspruch 5, **dadurch gekennzeichnet, dass** das Speiseeisprodukt eines von Folgendem ist: Eiscremes, gefrorene Joghurts, halbgefrorene Desserts, Sorbets, Granitas, Smoothies und Kuchenfüllungen.

## Revendications

1. Procédé de préparation d'un produit de crème glacée à base de fruits secs **caractérisé en ce qu'**il comprend les étapes suivantes :
a. étape de production antioxydante de fruits secs (100) consistant en l'étape d'entrée et de préparation des fruits (110), dans lequel les fruits frais sont initialement contrôlés de manière qualitative, puis lavés à l'aide d'un procédé automatisé et, si nécessaire, épluchés, coupés en lanières ou en cubes, puis soumis à l'étape de séchage antioxydant de fruits (120), qui se déroule par dépôt, sur des grilles, dans un séchoir à fruits et légumes statique ou continu, dans lequel ledit séchoir est constitué d'un système de chauffage capable d'atteindre des températures modérées au moyen de résistances électriques classiques alimentées en énergie par des panneaux solaires photovoltaïques et/ou des brûleurs classiques à gaz méthane ou GPL, dans lequel ledit séchoir est également constitué d'un système pour introduire de l'air déshumidifié ayant une teneur en humidité comprise entre 1 % et 10 % et de préférence équivalent à 2-3 % et pour éliminer de l'air résiduel et dans lequel l'étape mentionnée ci-dessus d'introduction d'air déshumidifié et d'élimination d'air résiduel se déroule à des intervalles préétablis par l'opérateur en fonction du type de fruits à traiter et cependant pas inférieurs à 5 minutes, dans lequel la température à l'intérieur du séchoir est comprise entre 25 °C et 40 °C pendant une période de traitement de séchage des fruits comprise entre 12 heures et 48 heures et dans lequel, à la fin de l'intervalle de temps mentionné ci-dessus, se déroule l'étape de réduction commandée de température (130), consistant en une réduction de température dans le séchoir jusqu'à la température ambiante, au moyen de la réduction commandée comprise entre 2 °C et 3 °C toutes les 3 heures, dans lequel, à la fin des étapes mentionnées ci-dessus, les fruits secs (105) sont obtenus qui, du fait des conditions de traitement mentionnées ci-dessus à température modérée et faible gradient thermique, n'auront subi qu'une activité oxydante minimale pendant le processus de séchage entier.
b. l'étape de production de la base neutre (200), dans lequel ladite base neutre (250) constitue, avec les fruits secs (105), les deux constituants qui forment le produit semi-fini à deux composants pour un produit de crème glacée (205) et dans lequel la base neutre (250) mentionnée ci-dessus est obtenue en mélangeant (210) les composants épaississants naturels (251), sucres naturels (252), fibres végétales (253), protéines végétales (254), lait en poudre et ses dérivés (255), le sel et des exhausteurs de goût (256) et de la poudre de cacao (257) ;
c. l'étape (300) de conditionnement du produit semi-fini à deux composants pour un produit de crème glacée (205), à savoir la base neutre (250) et les fruits secs (105), qui est réalisée par conditionnement dans des sachets (320) sous atmosphère modifiée (MAP) (310) et dans lequel les fruits secs (105) mentionnés ci-dessus et la base neutre (250) mentionnée ci-dessus sont contenus séparément dans deux sachets différents (320) ;
d. l'étape de production du produit de crème glacée (400), dans lequel le produit semi-fini à deux composants pour un produit de crème glacée (205) est transformé, au moment de la consommation, sous la forme d'un produit de crème glacée aromatisé aux fruits préparé par les actions successives suivantes consistant à :
- effectuer la réhydratation (410) comprenant l'ouverture du sachet (320) contenant les fruits secs (105) puis le mélange de ces derniers à température ambiante avec un liquide comestible (480) constitué d'une ou plusieurs substances comprenant de l'eau, jus de fruits et lait de vache, lait de brebis, lait de chèvre ainsi que ses dérivés ;
- mélanger (420) les fruits réhydratés avec la base neutre (250) contenue dans l'autre sachet (320) ;
- mixer (430) le mélange obtenu pendant une période comprise entre 1 min et 5 min ;
- fouetter (440) à bas régime dans une sorbetière à une température comprise entre -8 °C et - 25 °C et plus préférablement à -15 °C jusqu'à l'obtention du produit de crème glacée aromatisé aux fruits préparé.

2. Procédé de préparation d'un produit de crème glacée selon la revendication 1, **caractérisé en ce que**, lors de l'étape de production antioxydante de fruits secs (100), les conditions de traitement, telles que la température modérée et ne dépassant pas 40 °C dans tous les cas, les valeurs de faible gradient thermique appliquées par la réduction commandée de la température et les valeurs minimales d'humidité de l'air introduit dans le système, soumettent les fruits secs uniquement à une activité oxydante minimale et ainsi les fruits secs (105) maintiennent intactes la teneur en composés organiques tels que des acides gras, la teneur en composants nobles tels que des vitamines et certaines protéines, la teneur en enzymes et sels minéraux, la teneur en sucres naturels, la teneur en fibres alimentaires et en phyto-complexe.

3. Procédé de préparation d'un produit de crème glacée selon la revendication 1, **caractérisé en ce que** le fouettage (440) consiste à refroidir, dans un récipient commun, par ajout constant d'azote liquide sous mélange continu à l'aide d'un fouet métallique commun et jusqu'à obtenir une consistance telle qu'un produit de crème glacée préparé est formé.

4. Procédé de préparation d'un produit de crème glacée selon la revendication 1, **caractérisé en ce que** l'étape de conditionnement (300) du produit semi-fini à deux composants pour un produit de crème glacée (205), à savoir la base neutre (250) et les fruits secs (105), est réalisée par conditionnement dans des sachets (320) d'un poids requis pour obtenir au moins une portion unique du produit de crème glacée aromatisé aux fruits préparé.

5. Procédé de préparation d'un produit de crème glacée à base de fruits secs selon l'une des revendications précédentes, **caractérisé en ce que** :
a. lesdits épaississants naturels (251) sont constitués d'une ou plusieurs substances comprenant de la farine de caroube, gomme tara, guar, agar-agar et psyllium avec une concentration comprise entre 0,5 % en poids et 5 % en poids et plus préférablement à une quantité équivalent à 2 % en poids ;
b. lesdits sucres naturels (252) sont constitués d'une ou plusieurs substances comprenant du saccharose, fructose, dextrose, glucose et/ou sucres hypocaloriques du type xylitol, stévia et érythritol à une concentration comprise entre 5 % et 40 % en poids, plus préférablement entre 15 % et 20 % en poids ;
c. lesdits exhausteurs de goût (256) comprennent du miso ;
d. ladite poudre de cacao (257) comprend de la poudre de cacao brut.

6. Procédé de préparation d'un produit de crème glacée à base de fruits secs selon la revendication 5, **caractérisé en ce que** le produit de crème glacée est l'un des suivants : crèmes glacées, yaourts glacés, desserts semi-glacés, sorbets, granités, smoothies et garnitures pour gâteaux.
